# EUROPEAN PATENT SPECIFICATION

(11) **EP 3 316 368 B1**
(45) Date of publication and mention of the grant of the patent: **22.04.2020**
(21) Application number: 16814538.1
(22) Date of filing: 27.06.2016
(51) Int. Cl.: H01M 4/96, H01M 12/06, H01M 12/08

(54) **AIR ELECTRODE MATERIAL, AIR ELECTRODE AND METAL AIR BATTERY**
LUFTELEKTRODENMATERIAL, LUFTELEKTRODE UND METALL-LUFT-BATTERIE
MATÉRIAU D'ÉLECTRODE À AIR, ÉLECTRODE À AIR, ET ACCUMULATEUR MÉTAL-AIR

(30) Priority: 26.06.2015 JP 2015128650
(43) Date of publication of application: 02.05.2018
(73) Proprietor: NGK Insulators, Ltd., Nagoya-shi, Aichi 467-8530 (JP)
(72) Inventor: HATTORI, Tatsuya, Nagoya-shi Aichi 467-8530 (JP); KITOH, Kenshin, Nagoya-shi Aichi 467-8530 (JP)
(74) Representative: MERH-IP Matias Erny Reichl Hoffmann Patentanwälte PartG mbB
(86) International application number: PCT/JP2016/069035
(87) International publication number: WO 2016/208770

(56) References cited:
- WO-A1-2013/073292
- JP-A- 2002 110 178
- JP-A- 2012 049 115
- JP-A- 2012 099 266
- JP-A- 2014 225 344
- US-A1- 2011 229 777
- US-A1- 2014 023 939
- US-A1- 2014 302 373

## Description

### Technical Field

The present invention relates to an air electrode material, an air electrode and a metal air battery.

### Background Art

An air electrode for a metal air battery typically comprises an electron conductive material as a main component, and an organic binder (for example, reference is made to Patent Literature 1). The organic binder maintains the shape of the air electrode by binding the electron conductive material.

### Citation List

### Patent Literature

[Patent Literature 1] Japanese Patent Application Laid-Open No. 2012-99266

### Summary of Invention

### Technical Problem

However, an improvement that is made to the characteristics of an air electrode by inclusion of an organic binder is limited by the fact that an organic binder does not contribute to the air electrode characteristics (hydroxide ion conductivity, electron conductivity and catalyst reactivity).

As a result of diligent investigations conducted by the present inventors, the new insight has been gained that the characteristics of an air electrode can be improved by use of carbon nanotubes as a binder.

The present invention is based on the new insight above and has the object of providing an air electrode material, an air electrode and a metal air battery that can enhance air electrode characteristics.

### Solution to Problem

The air electrode of the present invention contains carbon nanotubes and an electron conductive material. The content amount of the carbon nanotubes in the air electrode is greater than or equal to 0.1 vol% and less than or equal to 50 vol%. The content amount of the electron conductive material in the air electrode is greater than or equal to 30 vol% and less than or equal to 99 vol%.

### Advantageous Effects of Invention

The present invention provides an air electrode material, an air electrode and a metal air battery that enhance air electrode characteristics.

### Brief Description of Drawings

FIG. 1 is a cross sectional view that schematically illustrates a configuration of a zinc-air secondary battery.
FIG. 2 is a schematic view describing a method of measuring air electrode resistance.
FIG. 3 is a SEM secondary electron image of an air electrode cross section.

### Description of Embodiments

An embodiment of a metal air battery will be described below making reference to the figures. A metal air battery is a concept that includes configurations such as a zinc-air secondary battery, a lithium-air secondary battery, or the like. The present embodiment describes a zinc-air secondary battery as an example of a metal air battery.

Those aspects of configuration in the following description of the figures that are the same or similar are denoted by the same or similar reference numerals. However, the figures are merely illustrative, and the actual ratios or the like of the respective dimensions may differ.

### Configuration of Zinc-Air Secondary Battery 10

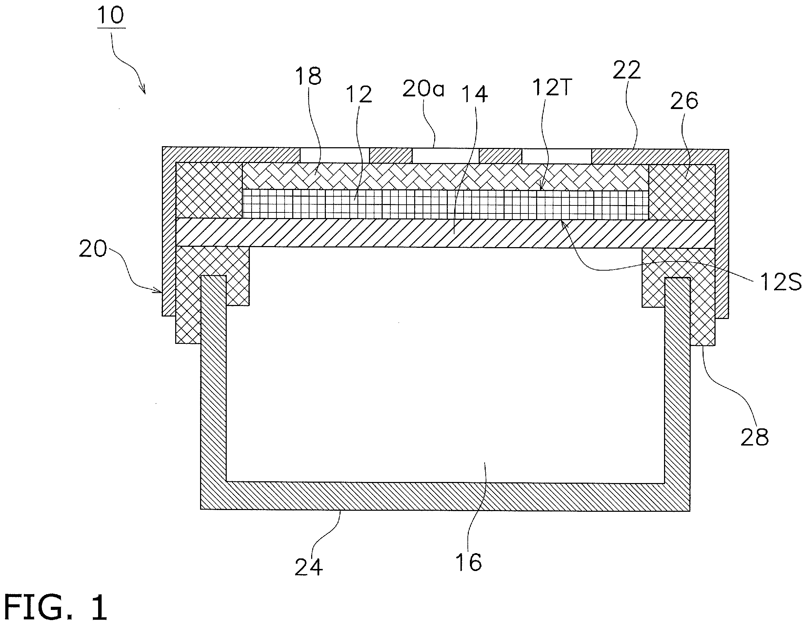

FIG. 1 is a cross sectional view that schematically illustrates a configuration of a zinc-air secondary battery 10. The zinc-air secondary battery 10 includes an air electrode 12, a hydroxide ion conductive separator 14, a negative electrode 16 immersed in an electrolyte solution, a positive electrode current collecting body 18, and a housing 20.

### 1. Air electrode 12

The air electrode 12 functions as a positive electrode that causes reactions that produce and/or reduce O₂. The air electrode 12 is disposed on the hydroxide ion conductive separator 14. The air electrode 12 includes a first principal surface 12S and a second principal surface 12T. The air electrode 12 comes into contact with the hydroxide ion conductive separator 14 on the first principal surface 12S. The air electrode 12 comes into contact with the positive electrode current collecting body 18 on the second principal surface 12T.

Although there is no particular limitation on the thickness of the air electrode 12, it may be configured as 1 to 100 µm, preferably 1 to 75 µm, more preferably 1 to 50 µm, and still more preferably 1 to 30 µm. In this manner, the surface area of the three phase interface of the gaseous phase, the electron conductive phase and the hydroxide ion conductive phase can be ensured to thereby maintain the catalytic reactivity of the air electrode 12.

The air electrode 12 includes carbon nanotubes (abbreviated below to "CNT") and an electron conductive material that is different from CNT.

CNT is configured from a fibrous carbon material forming a hexagonal lattice structure of graphene into a cylindrical shape. CNT may be configured as a single-walled carbon nanotube or as a multi-walled carbon nanotube. Both ends of the CNT may be closed or open. Although the average length of CNT may be configured as greater than or equal to 0.1 µm, there is no particular limitation in this regard. Although the average diameter of CNT may be configured as greater than or equal to 1.0 nm, there is no particular limitation in this regard.

CNT functions as an inorganic binder. CNT winds around the electron conductive material. In this manner, CNT maintains the shape of the air electrode 12 by binding the electron conductive material. CNT preferably makes direct contact with at least a portion of the electron conductive material. CNT functions as an oxygen reducing/producing catalyst. The catalytic reactivity of the air electrode 12 can be enhanced by including CNT in the air electrode 12. CNT functions as an electron conductive body. The electron conductivity of the air electrode 12 can be enhanced by including CNT in the air electrode 12.

CNT preferably is configured inside the air electrode 12 in an untangled state rather than in a bundled configuration. In this manner, the electron conductive material can be bound efficiently. However, a portion of CNT may be present in a bundled configuration within the air electrode 12.

It is preferred that respective CNTs come into contact with reference to the thickness direction of the air electrode 12. That is to say, it is preferred that CNTs are connected in the thickness direction. In this manner, a long distance electron conducting path can be formed in the thickness direction. CNTs may be electrically connected through the electron conductive material.

The electron conductive material is bonded by the CNT. The electron conductive material functions as an electron conductive body. The electron conductive material preferably functions as an oxygen reducing/producing catalyst.

Although there is no particular limitation on the shape of the electron conductive material, a particulate shape is preferred. The electron conductive material is preferably connected to the CNT. The electron conductive material may be sandwiched between CNTs. The respective portions of electron conductive material are preferably in mutual contact. In this manner, a short distance electron path is formed.

The electron conductive material includes a perovskite oxide expressed by the general formula ABO _{3-δ} (δ≦0.4), a carbon-based material, a metal exhibiting an oxygen reducing/producing catalytic function such as nickel, platinum or the like, manganese dioxide, nickel oxide, cobalt oxide, spinel oxides, other nitrides, carbides and the like.

The electron conductive material is suitably a perovskite oxide that is expressed by the general formula ABO_{3-δ} (wherein δ≦0.4), that includes at least La at the A site and that includes at least Ni, Fe and Cu at the B site. This type of perovskite oxide is expressed by the composition formula LaNi_{1-x-y}CuₓFe_{y}O_{3-δ}(x>0,y>0, x+y<1, 0≦δ≦0.4). In the following description, a perovskite oxide that is expressed by the composition formula LaNi_{1-x-y}CuₓFe_{y}O_{3-δ} will be abbreviated as LNFCu.

In the composition formula for LNFCu, it is preferred that x≦0.5, further preferred that 0.01≦x≦0.5, and still more preferred that 0.05≦x≦0.3. In the composition formula for LNFCu, it is preferred that y≦0.3, and more preferred that 0.01 ≦y≦0.3. It is possible to enhance the electron conductivity, the coefficient of thermal expansion and the catalytic reactivity of the air electrode 12 by adjusting x and y to the above ranges.

LNFCu is preferably configured by a monophase perovskite. In this manner, it is possible to further enhance the electron conductivity and the catalytic reactivity of the air electrode 12.

The electron conductive material may contain LNFCu as a main component. In the present embodiment, the term such that composition P "contains as a main component" substance Q means that substance Q occupies greater than or equal to 70 wt%, and preferably occupies greater than or equal to 90 wt% of the total of composition P.

The content amount of CNT in the air electrode 12 may be configured as greater than or equal to 0.1 vol% to less than or equal to 50 vol%. The content amount of the electron conductive material in the air electrode 12 is preferably greater than or equal to 30 vol% to less than or equal to 99 vol%. In this manner, it is possible to cause CNT, that functions as an electron conductive body and as an oxygen reducing/producing catalyst, to also function as an inorganic binder. As a result, the air electrode 12 may omit inclusion of an organic binder that makes no contribution to performance (hydroxide ion conductivity, electron conductivity and catalyst reactivity). Therefore the characteristics of the air electrode 12 can be conspicuously enhanced in comparison to a configuration in which the electron conductive material is bonded by use of an organic binder.

The volume ratio of CNT relative to the electron conductive material in the air electrode 12 (CNT volume ÷ electron conductive material volume) may be configured as greater than or equal to 0.001 to less than or equal to 1 and is preferably greater than or equal to 0.001 to less than or equal to 0.5.

The air electrode 12 may contain a minute quantity of an organic binder. The content amount of the organic binder in the air electrode is preferably less than or equal to 10 vol%. Although a thermoplastic resin or thermo-curing resin may be used as the organic binder, there is no particular limitation in this regard.

Preferred examples of the organic binder include carboxymethyl cellulose (CMC), polyethylene, polypropylene, polytetrafluoroethylene (PTFE), polyvinylidene fluoride (PVDF), styrene-butadiene rubber, tetrafluoroethylene-hexafluoroethylene copolymer, tetrafluoroethylene-hexafluoropropylene copolymer (FEP), tetrafluoroethylene-perfluoroalkyl vinyl ether copolymer (PFA), vinylidene fluoride-hexafluoropropylene copolymer, vinylidene fluoride-chlorotrifluoroethylene copolymer, ethylene-tetrafluoroethylene copolymer (ETFE resin), polychlorotrifluoroethylene (PCTFE), vinylidene fluoride-pentafluoro propylene copolymer, propylene-tetrafluoroethylene copolymer, ethylene-chlorotrifluoroethylene copolymer (ECTFE), vinylidene fluoride-hexafluoropropylene-tetrafluoroethylene copolymer, vinylidene fluoride-perfluoromethylvinylether-tetrafluoroethylene copolymer, ethylene-acrylic acid copolymer, and any arbitrary mixture of the above.

The air electrode 12 may also contain a hydroxide ion conductive material. It is possible to further enhance the hydroxide ion conductivity of the air electrode 12 by inclusion of the hydroxide ion conductive material.

The hydroxide ion conductive material includes use of a material that enables conduction or permeation of hydroxide ions, and may be an organic material or an inorganic material. Although there is no particular limitation on the shape of the hydroxide ion conductive material, it includes a particulate shape or a film configuration. Although a film-shaped hydroxide ion conductive material may be completely covered by CNT and the electron conductive material, it is preferred that open pores are included in order to enable diffusion of the O₂ and H₂O from the positive electrode current collecting body 18 side to the hydroxide ion conductive separator 14 side.

The hydroxide ion conductive material includes use of a layered double hydroxide (referred to below as an "LDH") which is expressed by the general formula M ²⁺₁₋ₓM³⁺ₓ (OH) ₂Aⁿ⁻_{x/n} • mH₂O(wherein M²⁺ is one or more types of bivalent cation, M³⁺ is one or more types of trivalent cation, Aⁿ⁻ is an n valent anion, n is an integer of at least 1, x is 0.1 to 0.4, and m is greater than or equal to 0). M²⁺ may include Ni²⁺, Mg²⁺, Ca²⁺, Mn²⁺, Fe²⁺, Co²⁺, Cu²⁺ and Zn²⁺. M³⁺ may include Fe³⁺, Al³⁺, Co³⁺, Cr³⁺, and In³⁺. Aⁿ⁻ may include NO³⁻, CO₃²⁻, SO ₄²⁻, OH⁻, Cl⁻, I⁻, Br⁻, and F⁻. In particular, an Mg-Al configuration of LDH is preferred in which M²⁺ is Mg²⁺, and M³⁺ includes Al³⁺.

The hydroxide ion-conductive material includes use of a polymer material that enables permeation or conduction of hydroxide ions. The polymer material suitably includes a hydroxide-ion-permeable anion-exchange group. Such a polymer material includes hydrocarbon resins having anion-exchange groups, such as quaternary ammonium, pyridinium, imidazolium, phosphonium, and sulfonium groups, and fluororesins.

The content amount of the hydroxide ion conductive material in the air electrode 12 may be configured as greater than or equal to 10 vol% to less than or equal to 70 vol%, and preferably greater than or equal to 20 vol% to less than or equal to 70 vol%.

### 2. Hydroxide Ion Conductive Separator 14

The hydroxide ion conductive separator 14 is disposed between the air electrode 12 and the negative electrode 16. The hydroxide ion conductive separator 14 makes contact with the first principal surface 12S of the air electrode 12. The hydroxide ion conductive separator 14 is configured from a material that exhibits selective permeability to the hydroxide ions that are produced and consumed in the air electrode 12.

The hydroxide ion conductive separator 14 preferably does not allow passage of alkali metal ions in the electrolyte solution or undesirable substances (such as carbon dioxide or the like) other than oxygen that is contained in the air. Such materials include dense ceramics that are inorganic solid electrolytes that exhibit hydroxide ion conductivity.

An inorganic solid electrolyte that exhibits hydroxide ion conductivity is preferably LDH that has been compacted by use of a solidifying method (for example, a hydrothermal solidifying method) and that is expressed by the general formula M²⁺₁₋ₓ M³⁺ₓ(OH)₂Aⁿ⁻_{x/n} • mH₂O. An inorganic solid electrolyte that exhibits hydroxide ion conductivity includes use of a configuration that has at least one type of basic composition selected from the group consisting of NaCo₂O₄, LaFe₃Sr₃O₁₀, Bi₄Sr₁₄ Fe₂₄O₅₆, NaLaTiO₄, RbLaNb₂O₇, KLaNb₂O₇, and Sr₄Co_{1.6}Ti_{1.4}O₈(OH)₂ • x H₂O.

The above inorganic solid electrolytes have been disclosed in PCT Laid Open Application 2011/108526 as a solid electrolyte that exhibits hydroxide ion conductivity for use in relation to a fuel cell. It is possible to suppress deterioration of the electrolyte solution resulting from production of carbon ions by use of a solid electrolyte that exhibits hydroxide ion conductivity as the hydroxide ion conductive separator 14, and to suppress short circuiting between the positive and negative electrodes with a configuration in which zinc dendrites produced during charging penetrate the hydroxide ion conductive separator 14.

The hydroxide ion conductive separator 14 may be configured as a composite body including a particle group containing the inorganic solid electrolyte that exhibits hydroxide ion conductivity and a component that assists in the curing or compaction of the particle group.

The hydroxide ion conductive separator 14 may be also configured as a composite body including an open-pore porous body that is used as a substrate and an inorganic solid electrolyte that is deposited and grown in the pores to thereby embed the pores of the porous body. The porous body may be configured as an insulating material such as a porous sheet or the like that is configured from a resin foam or a fibrous material, or a ceramic such as alumina, zirconia, or the like.

The relative density of the hydroxide ion conductive separator 14 as calculated by use of an Archimedes method is preferably greater than or equal to 88%, more preferably greater than or equal to 90%, and still more preferably greater than or equal to 94%.

There is no particular limitation on the shape of the hydroxide ion conductive separator 14, and a dense plate shape or film configuration is possible. When formed as a plate, the thickness of the hydroxide ion conductive separator 14 may be configured as 0.001 to 0.05 mm, preferably 0.001 to 0.01 mm, and more preferably 0.001 to 0.005 mm.

A higher hydroxide ion conductivity in the hydroxide ion conductive separator 14 is preferred, and it typically exhibits a conductivity of 1×10⁻⁴∼ 1×10⁻¹S/m (1×10⁻³∼1 mS/cm), and more typically 1×10⁻⁴∼1×10⁻²S/m (1×10^{- 3}∼1×10⁻¹ mS/cm).

### 3. Negative Electrode 16

The negative electrode 16 is disposed on the opposite side of the air electrode 12 to thereby sandwich the hydroxide ion conductive separator 14. The negative electrode 16 is immersed in an electrolyte solution.

The negative electrode 16 includes zinc or a zinc alloy that functions as a negative electrode active material. There is no particular limitation in relation to the shape of the negative electrode 16, and a configuration as a particle, plate or gel is possible with a particulate or gel configuration being preferably in light of the reaction rate. The particle diameter of a particle-shaped negative electrode 16 is preferably 30 to 350 µm. A gel-shaped negative electrode 16 is preferably shaped into a gel configuration by mixing and agitating a mercury-free zinc alloy powder having a particle diameter of 100 to 300 µm, an alkali electrolyte solution and a thickener (gelling agent).

The zinc alloy includes mercury alloys or mercury-free alloys of magnesium, aluminum, lithium, bismuth, indium, lead, or the like. The zinc alloy is suitably a mercury-free zinc alloy without addition of mercury or lead and preferably includes aluminum, bismuth, indium or a combination thereof. The zinc alloy more preferably contains 50 to 1000 ppm bismuth, 100 to 1000 ppm indium, and 10 to 100 ppm aluminum and/or calcium, and still more preferably 100 to 500 ppm bismuth, 300 to 700 ppm indium, and 20 to 50 ppm aluminum and/or calcium.

The negative electrode 16 may be supported on the negative electrode current collecting body. The negative electrode current collecting body includes a configuration of a metal plate such as stainless steel, copper, nickel or the like, a metal mesh, carbon paper, an oxide conductor, or the like.

The electrolyte solution includes use of a known electrolyte solution that is generally used in zinc-air batteries. The electrolyte solution includes use of an alkali metal hydroxide aqueous solution such as a potassium hydroxide aqueous solution, a sodium hydroxide aqueous solution, or the like, an aqueous solution including zinc chloride or zinc perchlorate, a non-aqueous solvent including zinc perchlorate, a non-aqueous solvent including a zinc bis(trifluoromethylsulfonyl) imide. The electrolyte solution is preferably a potassium hydroxide aqueous solution that is one type of an alkali metal hydroxide aqueous solution, and more preferably includes 3 to 50 wt% of potassium hydroxide (for example, 30 to 45 wt%).

### 4. Positive Electrode Current Collecting Body 18

The positive electrode current collecting body 18 is disposed on the opposite side of the hydroxide ion conductive separator 14 to thereby sandwich the air electrode 12. The positive electrode current collecting body 18 makes contact with the second principal surface 12T of the air electrode 12.

The positive electrode current collecting body 18 preferably exhibits air permeability to enable supply of air to the air electrode 12. The positive electrode current collecting body 18 includes a configuration of a metal plate of stainless steel, copper, nickel or the like, a metal mesh, carbon paper, an oxide conductor, or the like.

### 5. Battery Housing 20

The battery housing 20 contains the air electrode 12, the hydroxide ion conductive separator 14, the negative electrode 16 immersed in the electrolyte, and the positive electrode current collecting body 18. The battery housing 20 includes a positive electrode housing 22, a negative electrode housing 24, a positive electrode gasket 26 and a negative electrode gasket 28.

The positive electrode housing 22 contains the air electrode 12, the hydroxide ion conductive separator 14, and the positive electrode current collecting body 18. Pores 20a are formed in the positive electrode housing 22 to enable passage of external air. The negative electrode housing 24 contains the negative electrode 16.

The positive electrode gasket 26 is disposed along an inner peripheral edge of the positive electrode housing 22. The negative electrode gasket 28 is disposed along a peripheral edge of the negative electrode housing 24. Although there is no limitation in relation to the material, shape and structure of the positive electrode gasket 26 and the negative electrode gasket 28, a configuration using a material that exhibits insulating characteristics such as nylon or the like is preferred. Air tight characteristics of the inner portion of the positive electrode housing 22 and the negative electrode housing 24 are ensured by sandwiching the hydroxide ion conductive separator 14 with the positive electrode gasket 26 and the negative electrode gasket 28.

### Method of Manufacture Zinc-Air Secondary Battery 10

Next, a method of manufacturing the zinc-air secondary battery 10 will be described.

### 1. Preparation of Air electrode 12

Firstly, a CNT dispersion is prepared. The CNT dispersion can be prepared by dispersing CNT in a solvent (for example, water or the like). The CNT concentration in the CNT dispersion can be configured as 0.1 wt% to 2.0 wt%, but there is no particular limitation in this regard. CNT is difficult to disperse in a liquid since it exhibits a tendency to coagulate. Consequently, a commercially available CNT dispersion (for example, a SWNT (Tradename) dispersion manufactured by Meijo Carbon (Ltd.)) may be used.

Next, the CNT dispersion is heated to vaporize the solvent and thereby concentrate the CNT dispersion. In this manner, the viscosity of the CNT dispersion can be configured to greater than or equal to 0.1 Pa·s and less than or equal to 200 Pa·s, and thereby more effectively realize the function of the CNT dispersion as a binder.

Then, an electron conductive material powder is prepared. In the following description, an electron conductive material powder will be described that uses an LNFCu powder. Firstly, a lanthanum hydroxide powder, a nickel oxide powder, a copper oxide powder and an iron oxide powder are dried (110°C, 12 hours). Then, the respective dried powders are weighed so that La, Ni, Cu and Fe coincide with desired molar ratios. Then, after wet blending of the respectively weighed powders in an aqueous medium and drying, a blended powder is prepared by passing through a sieve. Next, a calcined powder is prepared by placing the blended powder in a covered alumina crucible and calcining in an oxygen atmosphere (900 to 1200°C, 12 hours). Next, after pulverizing the calcined powder and applying uniaxial pressing, a green body is formed by use of a CIP (cold isostatic press). Then, a sintered body is prepared by disposing the green body in an alumina sheath and firing in an oxygen atmosphere (900 to 1200°C, 12 hours). Then the sintered body is subjected to wet grinding using a ball mill to prepare an LNFCu powder.

Next, the CNT dispersion and the electron conductive material powder are respectively weighed. At that time, the content amount of CNT in the air electrode 12 is adjusted to be greater than or equal to 0.1 vol%, and less than or equal to 50 vol%, and the content amount of the electron conductive material in the air electrode 12 is adjusted to be greater than or equal to 30 vol%, and less than or equal to 99 vol%.

Then, after placing the weighed CNT dispersion and the electron conductive material powder into an agate mortar, the agate mortar is heated using a hot stirrer (60 to 90°C) to thereby blend the CNT dispersion and the electron conductive material powder and prepare a blended paste. At this time, the solvent is caused to vaporize from the blended paste until a viscosity is reached to enable printing in the following steps.

Then, after using a printing method to print the blended paste onto the positive electrode current collecting body 18 (for example, carbon paper or the like), drying is performed (60 to 120°C, 1 to 12 hours) in an atmosphere of air. A layered body of the air electrode 12 and the positive electrode current collecting body 18 is completed in accordance with the above description.

### 2. Preparation of Hydroxide Ion Conductive Separator 14

The following description will describe the preparation of an LDH separator as an example of the hydroxide ion conductive separator 14.

Next, an LDH powder expressed by the general formula of M²⁺₁₋ₓM³⁺ₓ(OH) ₂Aⁿ⁻_{x/n} • mH₂O is prepared.

Next, an LDH green body having a relative density of 43 to 65% is prepared by pressure molding (for example, CIP or the like) of an LDH powder. The relative density of the LDH green body is a value that is calculated by dividing the density calculated on the basis of the weight and the dimensions of the LDH green body by a theoretical density. To suppress an effect of adsorbed moisture on the relative density, the LDH green body is preferably prepared by use of LDH powder that is stored for at least 24 hours in a desiccator at less than or equal to a relative humidity of 20%.

Next, an LDH fired body is prepared by firing the LDH green body (400 to 850°C, 1 to 10 hours). The weight of the LDH fired body is preferably 57 to 65% of the LDH green body, and the volume of the LDH fired body is preferably less than or equal to 70 to 76% of the LDH green body.

Next, the LDH fired body is retained in or directly above an aqueous solution that contains anions (Aⁿ⁻) of *n* valency to produce an LDH body by hydrothermal synthesis (20 to 200°C, 1 to 50 hours).

Then, the LDH separator is completed by removing excess moisture from the LDH body in an environment of a temperature of less than or equal to 300°C and of less than or equal to 25% humidity.

### 3. Assembly of Battery Housing 20

Next the negative electrode gasket 28 is mounted on the negative electrode housing 24 that contains the negative electrode 16 that is immersed in the electrolyte solution.

Next, the hydroxide ion conductive separator 14, the layered body comprising the air electrode 12 and the positive electrode current collecting body 18, and the positive electrode gasket 26 are disposed in sequence on the negative electrode gasket 28, and then the positive electrode housing 22 that mounts the positive electrode gasket 26 is covered.

The zinc-air secondary battery 10 is completed in the above manner.

### OTHER EMBODIMENTS

Although an embodiment of the present invention has been described, the present invention is not limited to the above embodiment, and various modifications are possible within a scope that does not depart from the spirit of the invention.

Although a zinc-air secondary battery 10 has been described as an example of a metal air battery, the air electrode 12 of the present invention may also be used in relation to other metal air batteries such as lithium-air secondary batteries or the like.

The zinc air secondary battery 10 is configured to include the air electrode 12, the hydroxide ion conductive separator 14, the negative electrode 16 that is immersed in an electrolyte solution, the positive electrode current collecting body 18, and the housing 20. However, a configuration of at least the air electrode 12, the negative electrode 16, and the electrolyte is sufficient.

There is no particular limitation in relation to the shape of the zinc-air secondary battery 10, and for example, it may be configured in a coin shape, button shape, sheet shape, layered shape, cylindrical shape, flat shape, square shape, or the like.

The air electrode 12 may also be adapted to a large secondary battery that is used in an electrical automobile or the like and not merely a small type of secondary battery.

The zinc-air secondary battery 10 may further comprise a positive electrode that is designated for charging. A designated charging positive electrode is disclosed in Japanese Patent Application Laid-Open No. 2010-176941. Provision of a designated charging positive electrode enables a high charging rate as a result of use of the designated charging positive electrode during charging operations even when the hydroxide ion conductivity of the hydroxide ion conductive separator 14 is low. Furthermore, since oxygen production at the air electrode 12 during charging operations is suppressed, it is possible to suppress deterioration or corrosion of the air electrode 12. The designated charging positive electrode includes carbon or metal titanium mesh configurations or the like.

### EXAMPLES

Examples of a metal air battery according to the present invention will be described below. However, the present invention is not thereby limited to the following examples.

### Preparation of Examples 1 to 3

A metal air battery according to Examples 1 to 3 was prepared as described below.

Firstly CNT as an inorganic binder was dispersed in water to prepare a CNT dispersion having a CNT concentration of 0.1 wt%.

Then, the CNT dispersion was heated to vaporize the solvent and thereby configure the viscosity of the CNT dispersion as 25 Pa·s.

Then, lanthanum hydroxide powder, nickel oxide powder, copper oxide powder and iron oxide powder were dried (110°C, 12 hours) and weighed so that x = 0.2 and y = 0.05 in the composition formula LaNi_{1-x-y}CuₓFe_{y}O_{3-δ}. Then, after wet blending the respectively weighed powders in an aqueous medium and drying, a blended powder was prepared by passing through a sieve. Next, a calcined powder was prepared by placing the blended powder in a covered alumina crucible and calcining in an oxygen atmosphere (1100°C, 12 hours). Next, after pulverizing the calcined powder and preparing a green body by applying uniaxial pressing, a sintered body was prepared by disposing the green body in an alumina sheath and firing in an oxygen atmosphere (1100°C, 12 hours). Then the sintered body was subjected to wet grinding using a ball mill to prepare an LNFCu powder.

Next, the concentrated CNT dispersion and the LNFCu powder were weighed so that the blending ratio of CNT and LNFCu coincides with the values illustrated in Table 1.

Next, after placing the weighed CNT dispersion and the LNFCu powder into an agate mortar, the agate mortar was heated using a hot stirrer to thereby blend the CNT dispersion and the LNFCu powder and prepare a blended paste. At this time, the solvent was caused to vaporize from the blended paste until a viscosity is reached that enables printing in the following steps.

Then, after printing the blended paste onto carbon paper, drying was performed at 80°C in an atmosphere of air. A layered body of the air electrode and the positive electrode current collecting body was completed in accordance with the above description.

Next, an ion exchange film (product name: Neosepta AHA manufactured by Astom Corporation) was prepared as a separator.

Then, the negative electrode gasket was mounted onto the negative electrode housing that contains a polypropylene non-woven fabric impregnated with a 1M KOH aqueous solution, and the separator, the layered body formed from the air electrode and the positive electrode current collecting body, and the positive electrode gasket was disposed in sequence on the negative electrode gasket. Then the positive electrode housing that mounts the positive electrode gasket was covered.

### Preparation of Example 4

A metal air battery according to Example 4 was prepared as described below.

Firstly a concentrated CNT dispersion was prepared in the same manner as Examples 1 to 3 above.

Next an LNFCu powder was prepared in the same manner as Examples 1 to 3 above.

Then, a commercial available Mg_{0.75}-Al_{0.25} LDH powder (Tradename: DHT6 manufactured by Kyowa Chemical Industry Co., Ltd) was prepared.

Next, the CNT dispersion, the LDH powder and the LNFCu powder were weighed so that the blending ratio of CNT, LDH and LNFCu coincided with the values illustrated in Table 1.

Next, after placing the weighed CNT dispersion, the LDH powder and the LNFCu powder into an agate mortar, the agate mortar was heated using a hot stirrer to thereby blend the CNT dispersion, the LDH powder and the LNFCu powder and prepare a blended paste.

Then, after printing the blended paste onto carbon paper, drying was performed at 80°C in an atmosphere of air. A layered body of the air electrode and the positive electrode current collecting body was completed in accordance with the above description.

Next, an ion exchange film (product name: Neosepta AHA manufactured by Astom Corporation) was prepared as a separator.

Then, the negative electrode gasket was mounted onto the negative electrode housing that contains a polypropylene non-woven fabric impregnated with a 1M KOH aqueous solution, and the separator, the layered body formed from the air electrode and the positive electrode current collecting body, and the positive electrode gasket were disposed in sequence on the negative electrode gasket. Then the positive electrode housing that mounts the positive electrode gasket was covered.

### Preparation of Example 5

A metal air battery according to Example 5 was prepared as described below.

Firstly a concentrated CNT dispersion was prepared in the same manner as Examples 1 to 3.

Next, an LNFCu powder was prepared in the same manner as Examples 1 to 3.

Then a carboxymethyl cellulose (CMC) powder was prepared as an organic binder.

Next, the CNT dispersion, the LNFCu powder and the CMC powder were weighed so that the blending ratio of CNT, LNFCu and CMC coincided with the values illustrated in Table 1.

Next, a CMC dispersion having a CMC concentration of 2 wt% was prepared by dissolving CMC powder in a solvent by mixing CMC powder with a solvent (ion exchanged water) in a mixer.

Next, after placing the weighed CNT dispersion, the CMC dispersion and the LNFCu powder into an agate mortar, the agate mortar was heated using a hot stirrer to thereby blend the CNT dispersion, CMC dispersion and the LNFCu powder and prepare a blended paste.

Then, after printing the blended paste onto carbon paper, drying was performed at 80°C in an atmosphere of air. A layered body formed from the air electrode and the positive electrode current collecting body was completed in accordance with the above description.

Next, an ion exchange film (product name: Neosepta AHA manufactured by Astom Corporation) was prepared as a separator.

Then, the negative electrode gasket was mounted onto the negative electrode housing that contains a polypropylene non-woven fabric impregnated with a 1M KOH aqueous solution, and the separator, the layered body formed from the air electrode and the positive electrode current collecting body, and the positive electrode gasket were disposed in sequence on the negative electrode gasket. Then the positive electrode housing that mounts the positive electrode gasket was covered.

### Preparation of Example 6

A metal air battery according to Example 6 was prepared as described below.

Firstly a concentrated CNT dispersion was prepared in the same manner as Examples 1 to 3.

Next, a carbon black powder was prepared.

Next, the CNT dispersion and the carbon black powder were weighed so that the blending ratio of CNT and carbon black coincided with the values illustrated in Table 1.

Next, after placing the weighed CNT dispersion and the carbon black powder into an agate mortar, the agate mortar was heated using a hot stirrer to thereby blend the CNT dispersion and the carbon black powder and prepare a blended paste.

Then, after printing the blended paste onto carbon paper, drying was performed at 80°C in an atmosphere of air. A layered body formed from the air electrode and the positive electrode current collecting body was completed in accordance with the above description.

Next, an ion exchange film (product name: Neosepta AHA manufactured by Astom Corporation) was prepared as a separator.

Then, the negative electrode gasket was mounted onto the negative electrode housing that contains a polypropylene non-woven fabric impregnated with a 1M KOH aqueous solution, and the separator, the layered body formed from the air electrode and the positive electrode current collecting body, and the positive electrode gasket were disposed in sequence on the negative electrode gasket. Then the positive electrode housing that mounts the positive electrode gasket was covered.

### Preparation of Comparative Examples 1 and 2

A metal air battery according to Comparative Examples 1 and 2 was prepared as described below.

Firstly a CMC powder was prepared as an organic binder.

Next, an LNFCu powder was prepared in the same manner as Examples 1 to 3.

Next, the CMC powder and LNFCu powder were weighed so that the blending ratio of CMC and LNFCu coincided with the values illustrated in Table 1.

Next, a CMC dispersion having a CMC concentration of 2 wt% was prepared by dissolving CMC powder in a solvent by mixing CMC powder with a solvent (ion exchanged water) in a mixer.

Next, a blended paste was prepared by placing the CMC dispersion and the LNFCu powder into an agate mortar and mixing.

Then, after printing the blended paste onto carbon paper, drying was performed at 80°C in an atmosphere of air. A layered body formed from the air electrode and the positive electrode current collecting body was completed in accordance with the above description.

Next, an ion exchange film (product name: Neosepta AHA manufactured by Astom Corporation) was prepared as a separator.

Then, the negative electrode gasket was mounted onto the negative electrode housing that contains a polypropylene non-woven fabric impregnated with a 1M KOH aqueous solution, and the separator, the layered body formed from the air electrode and the positive electrode current collecting body, and the positive electrode gasket were disposed in sequence on the negative electrode gasket. Then the positive electrode housing that mounts the positive electrode gasket was covered.

### Preparation of Comparative Example 3

A metal air battery according to Comparative Example 3 was prepared as described below.

Firstly a CNT dispersion was prepared in the same manner as Examples 1 to 3.

Next, a CNT paste was prepared by placing the weighed CNT dispersion into an agate mortar heating with a hot stirrer.

Then, after printing the CNT paste onto carbon paper, drying was performed at 80°C in an atmosphere of air. A layered body formed from the air electrode and the positive electrode current collecting body was completed in accordance with the above description.

Next, an ion exchange film (product name: Neosepta AHA manufactured by Astom Corporation) was prepared as a separator.

Then, the negative electrode gasket was mounted onto the negative electrode housing that contains a polypropylene non-woven fabric impregnated with a 1M KOH aqueous solution, and the separator, the layered body formed from the air electrode and the positive electrode current collecting body, and the positive electrode gasket were disposed in sequence on the negative electrode gasket. Then the positive electrode housing that mounts the positive electrode gasket was covered.

### Preparation of Comparative Example 4

A metal air battery according to Comparative Example 4 was prepared as described below.

Firstly a CMC powder was prepared as an organic binder.

Next, a carbon black powder was prepared in the same manner as Example 6.

Next, the CMC powder and carbon black powder were weighed so that the blending ratio of CMC and carbon black coincided with the values illustrated in Table 1.

Next, a CMC dispersion having a CMC concentration of 2 wt% was prepared by dissolving CMC powder in a solvent by mixing CMC powder with a solvent (ion exchanged water) in a mixer.

Next, a blended paste was prepared by placing the CMC dispersion and the carbon black powder into an agate mortar and mixing.

Then, after printing the blended paste onto carbon paper, drying was performed at 80°C in an atmosphere of air. A layered body formed from the air electrode and the positive electrode current collecting body was completed in accordance with the above description.

Next, an ion exchange film (product name: Neosepta AHA manufactured by Astom Corporation) was prepared as a separator.

Then, the negative electrode gasket was mounted onto the negative electrode housing that contains a polypropylene non-woven fabric impregnated with a 1M KOH aqueous solution, and the separator, the layered body formed from the air electrode and the positive electrode current collecting body, and the positive electrode gasket were disposed in sequence on the negative electrode gasket. Then the positive electrode housing that mounts the positive electrode gasket was covered.

### SEM Observation

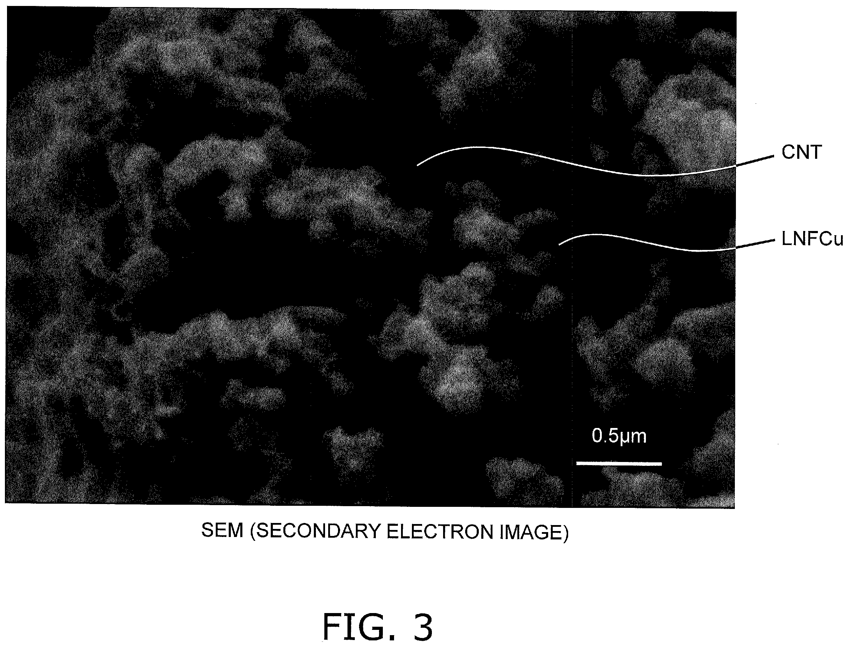

A cross section of the air electrode according to Examples 1 to 6 was observed using an SEM to thereby observe the microstructure of the air electrode. FIG. 3 is a SEM secondary electron image of an air electrode cross section of Example 2. The SEM is a JSM-6610LV manufactured by JEOL Ltd., and has an acceleration voltage of 20kV.

As illustrated in FIG. 3, a configuration was observed in which CNT functioned as a binder since the CNT winds around the LNFCu particles. The plurality of CNT surrounds the LNFCu particles on the whole.

As illustrated in FIG. 3, a configuration was observed in which a long distance electron conduction path was formed by the mutual contact of the plurality of CNT. Furthermore, a configuration was observed in which a short distance electron conduction path was formed by the mutual contact of the LNFCu particles. In addition, a configuration was observed in which the long distance electron conduction path due to CNT is connected with the short distance electron conduction path due to LNFCu particles by direct contact of the LNFCu particles and CNT.

### Evaluation of Air electrode Resistance

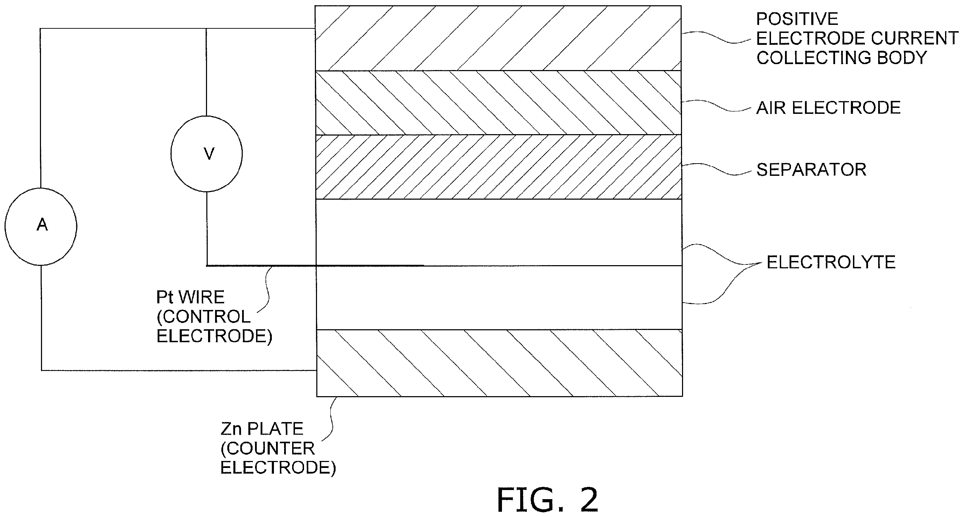

FIG. 2 is a schematic view describing the method of measuring the air electrode resistance.

Firstly, a control electrode of Pt wire is inserted into an electrolyte solution, a Zn plate as a counter electrode opposite the air electrode is disposed to sandwich the electrolyte solution and configure the working electrode as the air electrode.

Then, an open circuit potential measurement was performed to thereby measure the open circuit potential (Voc) of the air electrode.

Next a cyclic voltammetry measurement is performed using a potential sweep width of ±0.8V with reference to the control electrode.

Then the air electrode resistance was calculated during charging and discharging by use of the following calculation method. The measurement results are summarized in Table 1.

Air electrode Resistance During Charging : [Ωm²] = (0.8[V - Voc/ (current density [A/cm² at 0.8V porential in the air electrode)
Air electrode Resistance During Discharging : [Ωm²] = ((Voc-0.8[V](current density [A/cm² at 0.8 V porential in the air electrode)

| | Configuration of Air Electrode | | | | | | | | Air Electrode Resistance | |
|---|---|---|---|---|---|---|---|---|---|---|
| | Electron Conductive Material | | CNT | | Ion Conductive Material | | Organic Binder | | During Charging [Ωcm2] | During Discharge [Ωcm2] |
| | Type | Content Ratio [vol. %] | Present/Absent | Content Ratio [vol. %] | Type | Content Ratio [vol. %] | Type | Content Ratio [vol. %] | | |
| Example 1 | LNFCu | 98 | Yes | 2 | - | - | - | - | 133 | 50 |
| Example 2 | LNFCu | 98 | Yes | 2 | - | - | - | - | 180 | 77 |
| Example 3 | LNFCu | 90 | Yes | 10 | - | - | - | - | 93 | 70 |
| Example 4 | LNFCu | 45 | Yes | 10 | MgAl-LDH | 45 | - | - | 70 | 55 |
| Example 5 | LNFCu | 97 | Yes | 2 | - | - | CMC | 1 | 190 | 130 |
| Example 6 | Carbon Black | 90 | Yes | 10 | - | - | - | - | 210 | 95 |
| Comparative Example 1 | LNFCu | 99 | No | - | - | - | CMC | 1 | 250 | 150 |
| Comparative Example 2 | LNFCu | 98 | No | - | - | - | CMC | 2 | 655 | 984 |
| Comparative Example 3 | - | - | Yes | 100 | - | - | - | - | 313 | 74 |
| Comparative Example 4 | Carbon Black | 90 | - | - | - | - | CMC | 10 | 319 | 100 |

As shown in Table 1, a reduction in the air electrode resistance was enabled respectively during charging and discharging in Examples 1 to 6 in which the content amount of CNT in the air electrode is greater than or equal to 0.1 vol% and less than or equal to 50 vol%, and the content amount of the electron conductive material in the air electrode is greater than or equal to 30 vol% and less than or equal to 99 vol%, when compared with Comparative Examples 1, 2 and 4 in which the content amount of the organic binder in the air electrode was greater than or equal to 1 vol%. This feature is due to the fact that CNT that functions as an oxygen reducing/producing catalyst and an electron conductive body is also caused to function as an inorganic binder.

As shown in Table 1, a reduction in the air electrode resistance was enabled during charging in Examples 1 to 6 in which the content amount of CNT in the air electrode is greater than or equal to 0.1 vol% and less than or equal to 50 vol%, and the content amount of the electron conductive material in the air electrode is greater than or equal to 30 vol% and less than or equal to 99 vol%, when compared with Comparative Example 3 in which the content amount of CNT in the air electrode was 10 vol%. This feature is due to the fact that the catalytic reactivity of the air electrode during charging was enhanced since the air electrode contains LNFCu that functions effectively as an oxygen reducing/producing catalyst and an electron conductive body.

In Examples 1 to 6 that use CNT as a binder, the shape of the green body of the air electrode was maintained in the same manner as Comparative Examples 1 to 4 that use CMC as a binder.

As shown in Table 1, a reduction in the air electrode resistance was enabled respectively during charging and discharging in Example 3 that contains LNFCu as an electron conductive material when compared with Example 6 in which carbon black is contained as the electron conductive material.

As shown in Table 1, a reduction in the air electrode resistance was enabled respectively during charging and discharging in Example 4 that contains LDH in a configuration of Mg_{0.75}-Al_{0.25} as a hydroxide ion conductive material when compared with Example 3 that does not contain LDH.

As shown in Table 1, a reduction in the air electrode resistance was particularly enabled during charging in Example 2 that uses only CNT as a binder when compared with Example 5 that uses CNT and CMC as a binder.

### Industrial Applicability

The present invention is useful in the field of metal air batteries since it is possible to enhance the characteristics of the air electrode.

### Reference Signs List

- 10: ZINC-AIR SECONDARY BATTERY
- 12: AIR ELECTRODE
- 14: HYDROXIDE ION CONDUCTIVE SEPARATOR
- 16: NEGATIVE ELECTRODE
- 18: POSITIVE ELECTRODE CURRENT COLLECTING BODY
- 20: HOUSING

## Claims

1. An air electrode material for a metal air battery, comprising,
carbon nanotubes, and
an electron conductive material, wherein
a content amount of the carbon nanotubes in the air electrode material is greater than or equal to 0.1 vol% and less than or equal to 50 vol%, and
a content amount of the electron conductive material in the air electrode material is greater than or equal to 30 vol% and less than or equal to 99 vol%, **characterized in that** the electron conductive material is perovskite oxide that is expressed by the general formula ABO_{3-δ} (wherein δ≦0.4), wherein the perovskite oxide includes at least La at the A site and that includes at least Ni, Fe and Cu at the B site.

2. An air electrode for a metal air battery, comprising
carbon nanotubes, and
an electron conductive material, wherein
a content amount of the carbon nanotubes in the air electrode is greater than or equal to 0.1 vol% and less than or equal to 50 vol%, and
a content amount of the electron conductive material in the air electrode is greater than or equal to 30 vol% and less than or equal to 99 vol%, **characterized in that** the electron conductive material is perovskite oxide that is expressed by the general formula ABO_{3-δ} (wherein δ≦0.4), wherein the perovskite oxide includes at least La at the A site and that includes at least Ni, Fe and Cu at the B site.

3. The air electrode according to claim 2, wherein
the carbon nanotubes function as a binder.

4. The air electrode according to claim 2 or claim 3 further comprising,
an organic binder, wherein
a content amount of the organic binder in the air electrode is less than or equal to 10 vol%.

5. The air electrode according to any one of claim 2 to claim 4 further comprising,
a hydroxide ion conductive material.

6. The air electrode according to any one of claim 3 to claim 5, wherein
the carbon nanotubes wind around the electron conductive material.

7. The air electrode according to claim 6, wherein
at least a portion of the electron conductive material makes contact with the carbon nanotubes.

8. A metal air battery comprising,
the air electrode according to any one of claim 2 to claim 7,
a negative electrode, and
an electrolyte disposed between the air electrode and the negative electrode.

9. The metal air battery according to claim 8, wherein
the electrolyte is an inorganic solid electrolyte that exhibits hydroxide ion conductivity.

## Patentansprüche

1. Luftelektrodenmaterial für eine Metall-Luft-Batterie, umfassend
Kohlenstoff-Nanoröhrchen, und
ein Elektronen leitendes Material, wobei
eine Inhaltsmenge der Kohlenstoff-Nanoröhrchen in dem Luftelektrodenmaterial größer als oder gleich 0,1 Vol% und kleiner als oder gleich 50 Vol% ist, und
eine Inhaltsmenge des Elektronen leitenden Materials in dem Luftelektrodenmaterial größer als oder gleich 30 Vol% und kleiner als oder gleich 99 Vol% ist, **dadurch gekennzeichnet, dass** das Elektronen leitende Material Perowskitoxid ist, das durch die allgemeine Formel ABO_{3-δ} (wobei δ≦0,4) ausgedrückt wird, wobei das Perowskitoxid wenigstens La an der A-Stelle enthält, und das wenigstens Ni, Fe und Cu an der B-Stelle enthält.

2. Luftelektrode für eine Metall-Luft-Batterie, umfassend
Kohlenstoff-Nanoröhrchen, und
ein Elektronen leitendes Material, wobei
eine Inhaltsmenge der Kohlenstoff-Nanoröhrchen in der Luftelektrode größer als oder gleich 0,1 Vol% und kleiner als oder gleich 50 Vol% ist, und
eine Inhaltsmenge des Elektronen leitenden Materials in der Luftelektrode größer als oder gleich 30 Vol% und kleiner als oder gleich 99 Vol% ist, **dadurch gekennzeichnet, dass** das Elektronen leitende Material Perowskitoxid ist, das durch die allgemeine Formel ABO_{3-δ} (wobei δ ≦ 0,4) ausgedrückt wird, wobei das Perowskitoxid wenigstens La an der A-Stelle enthält, und das wenigstens Ni, Fe und Cu an der B-Stelle enthält.

3. Luftelektrode nach Anspruch 2, wobei
die Kohlenstoff-Nanoröhrchen als ein Binder fungieren.

4. Luftelektrode nach Anspruch 2 oder 3, ferner umfassend
einen organischen Binder, wobei
eine Inhaltsmenge des organischen Binders in der Luftelektrode kleiner als oder gleich 10 Vol% ist.

5. Luftelektrode nach einem der Ansprüche 2 bis 4, ferner umfassend
ein Hydroxidionen leitendes Material.

6. Luftelektrode nach einem der Ansprüche 3 bis 5, wobei
sich die Kohlenstoff-Nanoröhrchen um das Elektronen leitende Material herumwickeln.

7. Luftelektrode nach Anspruch 6, wobei
zumindest ein Abschnitt des Elektronen leitenden Materials mit den Kohlenstoff-Nanoröhrchen in Kontakt tritt.

8. Metall-Luft-Batterie, umfassend
die Luftelektrode nach einem der Ansprüche 2 bis 7, eine negative Elektrode, und
einen Elektrolyten, der zwischen der Luftelektrode und der negativen Elektrode angeordnet ist.

9. Metall-Luft-Batterie nach Anspruch 8, wobei
der Elektrolyt ein anorganischer Festelektrolyt ist, der Hydroxidionen-Leitfähigkeit aufweist.

## Revendications

1. Matériau d'électrode à air pour une batterie métal-air, comprenant
des nanotubes de carbone, et
un matériau conducteur d'électrons,
dans lequel
la quantité en contenu des nanotubes de carbone dans le matériau d'électrode à air est supérieure ou égale à 0,1 % en volume et inférieure ou égale à 50 % en volume, et
la quantité en contenu du matériau conducteur d'électrons dans le matériau d'électrode à air est supérieure ou égale à 30 % en volume et inférieure ou égale à 99 % en volume,
**caractérisé en ce que** le matériau conducteur d'électrons est un oxyde de perovskite représenté par la formule générale ABO_{3-δ} (où δ ≤ 0,4), et dans lequel l'oxyde de perovskite contient au moins La au niveau du site A et contient au moins Ni, Fe et Cu au niveau du site B.

2. Electrode à air pour une batterie métal-air, comprenant
des nanotubes de carbone, et
un matériau conducteur d'électrons,
dans lequel
la quantité en contenu des nanotubes de carbone dans le matériau d'électrode à air est supérieure ou égale à 0,1 % en volume et inférieure ou égale à 50 % en volume, et
la quantité en contenu du matériau conducteur d'électrons dans le matériau d'électrode à air est supérieure ou égale à 30 % en volume et inférieure ou égale à 99 % en volume,
**caractérisé en ce que** le matériau conducteur d'électrons est un oxyde de perovskite représenté par la formule générale ABO_{3-δ} (où δ ≤ 0,4), et dans lequel l'oxyde de perovskite contient au moins La au niveau du site A et contient au moins Ni, Fe et Cu au niveau du site B.

3. Electrode à air selon la revendication 2, dans laquelle les nanotubes de carbone fonctionnent comme un liant.

4. Electrode à air selon la revendication 2 ou la revendication 3, comprenant en outre un liant organique, dans laquelle la quantité en contenu du liant organique dans l'électrode à air est inférieure ou égale à 10 % en volume.

5. Electrode à air selon l'une quelconque des revendications 2 à 4, comprenant en outre un matériau conducteur d'ions hydroxyde.

6. Electrode à air selon l'une quelconque des revendications 3 à 5, dans laquelle les nanotubes de carbone sont enroulés autour du matériau conducteur d'électrons.

7. Electrode à air selon la revendication 6, dans laquelle au moins une partie du matériau conducteur d'électrons fait contact avec les nanotubes de carbone.

8. Batterie métal-air comprenant
l'électrode à air selon l'une quelconque des revendications 2 à 7,
une électrode négative, et
un électrolyte disposé entre l'électrode à air et l'électrode négative.

9. Batterie métal-air selon la revendication 8, dans laquelle l'électrolyte est un électrolyte solide inorganique qui présente une conductivité des ions hydroxyde.
